# EUROPEAN PATENT SPECIFICATION

(11) **EP 3 406 339 B1**
(45) Date of publication and mention of the grant of the patent: **15.07.2020**
(21) Application number: 18174422.8
(22) Date of filing: 25.05.2018
(51) Int. Cl.: B01J 20/26, B01J 20/30, B01J 31/02, B01J 31/40, B01J 45/00

(54) **POLYISOBUTYLENE COMPRISING CHELATING AGENTS**
CHELATBILDNER MIT POLYISOBUTYLEN
POLYISOBUTYLÈNE COMPRENANT DES AGENTS DE CHÉLATION

(30) Priority: 25.05.2017 US 201762511327 P; 15.05.2018 US 201815980680
(43) Date of publication of application: 28.11.2018
(73) Proprietor: Qatar Foundation For Education Science And Community Development, Doha (QA)
(72) Inventor: Bazzi, Hassan Said, Doha (QA); Al-Hashimi, Mohammed, Doha (QA); Bergbreiter, David E., College Station, TX Texas 77843 (US); Chouikhi, Dalila, Doha (QA)
(74) Representative: Sparing, Rolf Klaus

(56) References cited:
- US-A1- 2007 203 019
- US-A1- 2009 203 860
- US-A1- 2016 243 463
- NILUSHA PRIYADARSHANI ET AL: "Polyolefin soluble polyisobutylene oligomer-bound metallophthalocyanine and azo dye additives", JOURNAL OF POLYMER SCIENCE, PART A: POLYMER CHEMISTRY, vol. 52, no. 4, 30 November 2013 (2013-11-30), pages 545-551, XP055517327, ISSN: 0887-624X, DOI: 10.1002/pola.27031

## Description

The present patent application relates to chemical separations, and particularly to a polymer-supported chelating agent for recovering a transition metal catalyst from a reaction mixture. The present invention is defined in and by the appended claims.

While catalysis is a key aspect of green chemistry and while homogeneous catalyzed processes using transition metals are now commonly used in synthesis of most drugs and chemical intermediates, the separation of the metal catalysts or their by-products from the desired products remains a problem. This issue has been addressed in a variety of ways. The established approach to address this problem is to use solid state sequestrants. There is an immense arsenal of ion exchange resins and functionalized inorganic supports that can sequester metals or metal catalyst residues. As insoluble solids, these materials have the advantage that they can be easily physically separated from product solutions. However, they are generally only effective when the solution components and the sequestrant can be intimately mixed. A crosslinked polystyrene resin with a covalent sequestrant that does not have solvent swellability is simply ineffective. In other cases, the transition metal catalysts decompose into insoluble metal colloids and interactions of these colloidal particles with solid supports can be ineffective, either because of the physical limitations of solid-solid interactions, or because other ligands present in the mixture compete with the sequestrating agent.

The US 2016/0243463 A1 describes metal-catalyzed reactions to remove transition metals or transition metal complexes, wherein the reaction mixture contains transition metals and a reaction product in solution.

Further the US 2009/0203860 A1 describes polyisobutylene (PIB) oligomers that are end-functionalized with ruthenium (Ru) catalysts.

Furthermore the US 2007/0203019 A1 describes polyisobutylene (PIB) oligomers end-functionalized as ligands that allow the preparation of transition metal complexes which are soluble in non-polar solvents, and which when used as catalyst in biphasic reactions, afford efficient catalyst recycling and reusability.

In the Journal of Polymer Chemistry February 2014 "polyolefin soluble polyisobutylene oligomer-bound metallophthalocyanine and azo dye additives" is the modification of polyisobutylene (PIB) oligomers described which serve as polyolefin additives in organic solvents.

Thus, a polymer-supported chelating agent solving the aforementioned problems is desired.

The polymer-supported chelating agent is polyisobutylene having a thiol-thioether terminal group as defined in claim 1. The polymer-supported chelating agent is made by reaction of the terminal carbon double bond of polyisobutylene with 1,2-ethanedithiol in a one-step click reaction, resulting in PIB functionalized with a thiol-thioether sequestering group. In use, the polymer-supported chelating agent is added to a biphasic solvent system containing a transition metal in solution for removal of the transition metal by liquid/liquid extraction. The transition metal is chelated or sequestered by the chelating agent and removed in a nonpolar organic phase, such as heptane.

The one-step click reaction avoids the multistep synthesis typically required to make polymer-bound catalysts that are soluble in organic solvents. In model experiments, a range of transition metal salts of Co²⁺, Ni²⁺, Cu²⁺, Pd²⁺ and Ru³⁺ were successfully extracted from aqueous or polar organic solutions into immiscible heptane solution of a PIB-bound thioether-thiol sequestrant. This PIB derivative demonstrated an excellent performance with quantitative metal complexation in many cases. This functional polymer is efficient even in the presence of competing ligands that are typically used in homogeneous catalysis. In addition, this sequestrant was successfully used for treatment of aqueous and polar organic solutions of crude product mixtures obtained in model Pd-catalyzed Suzuki and Buchwald-Hartwig cross-coupling reactions, as well as in a Cu(I)-catalyzed alkyne/azide cyclization (CuAAC) reaction.

The polymer-supported chelating agent is polyisobutylene having a thiol-thioether terminal group. The polymer-supported chelating agent is made by reaction of the terminal carbon double bond of polyisobutylene with 1,2-ethanedithiol in a one-step click reaction, resulting in PIB functionalized with a thiol-thioether sequestering group. In use, the polymer-supported chelating agent is added to a biphasic solvent system containing a transition metal in solution for removal of the transition metal by liquid/liquid extraction. The transition metal is chelated or sequestered by the chelating agent and removed in a nonpolar organic phase, such as heptane. The one-step click reaction avoids the multistep synthesis typically required to make polymer-bound catalysts that are soluble in organic solvents. In model experiments, a range of transition metal salts of Co²⁺, Ni²⁺, Cu²⁺, Pd²⁺ and Ru³⁺ were successfully extracted from aqueous or polar organic solutions into immiscible heptane solution of a PIB-bound thioether-thiol sequestrant. This PIB derivative demonstrated an excellent performance with quantitative metal complexation in many cases. This functional polymer is efficient even in the presence of competing ligands that are typically used in homogeneous catalysis. In addition, this sequestrant was successfully used for treatment of aqueous and polar organic solutions of crude product mixtures obtained in model Pd-catalyzed Suzuki cross-coupling and Buchwald-Hartwig amination reactions, as well as in a Cu(I)-catalyzed alkyne/azide cyclization (CuAAC) reaction.

The polymer-supported chelating agent will be better understood with reference to the following examples

### Example 1

### Synthesis of the polymer-supported chelating agent

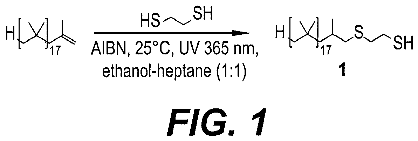

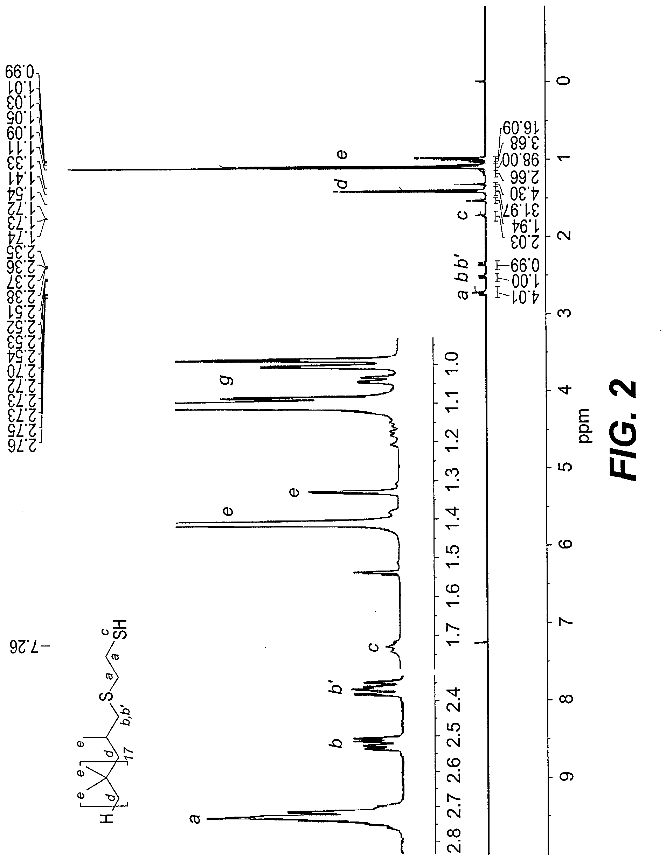

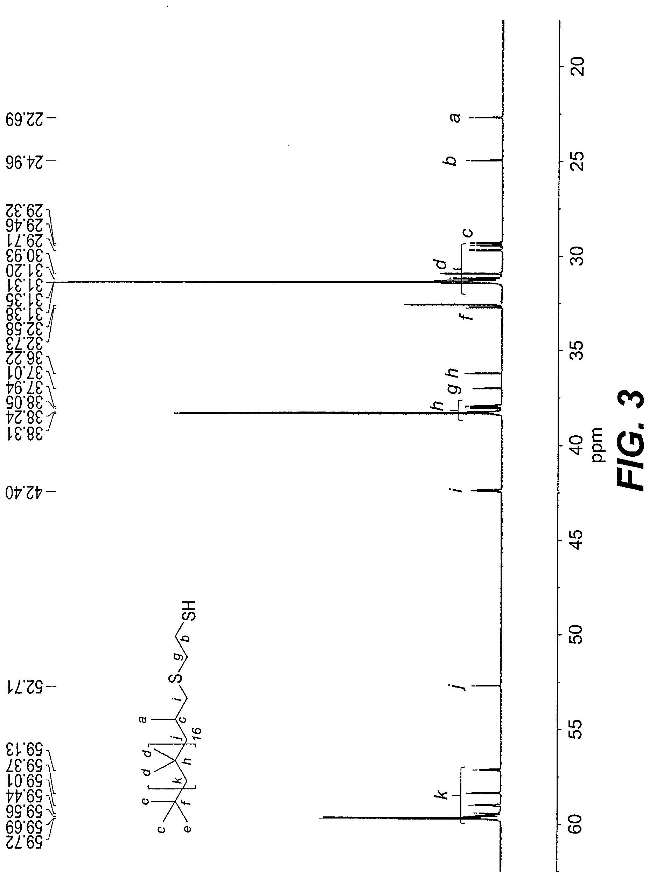

Dithiol-functionalized polybutadiene 1 was prepared via a green and simple single step radical thiol-ene "click" reaction between commercially available and inexpensive 1,2-ethanedithiol and alkene-terminated PIB Glissopal 1000 (*DPₙ* = 18), as depicted in Fig. 1. The desired polymer 1 was obtained as clear viscous liquid in 92 % yield and fully characterized by ¹H (see Fig. 2) and ¹³C NMR spectroscopy (see Fig. 3). As is true for other functionalized PIB derivatives, NMR spectroscopy makes it easy to characterize the products, since the signals of the PIB backbone appear in the 1.00-1.50 ppm region, whereas signals of the functional terminus are observed downfield, from 1.50 to 3.00 ppm. In our first attempts, thermal initiation with either 0.1 *eq.* of di-*tert*-butyl peroxide (DTBP) or azobisisobutyronitrile (AIBN) at 70°C led to complete transformation of the PIB alkene in 24 h. However, in both cases, the desired thioether-thiol product **1** was contaminated with the bis-thioether **2** having the following structure:

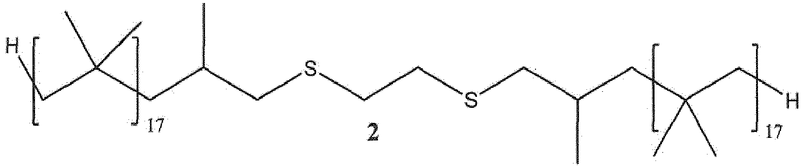

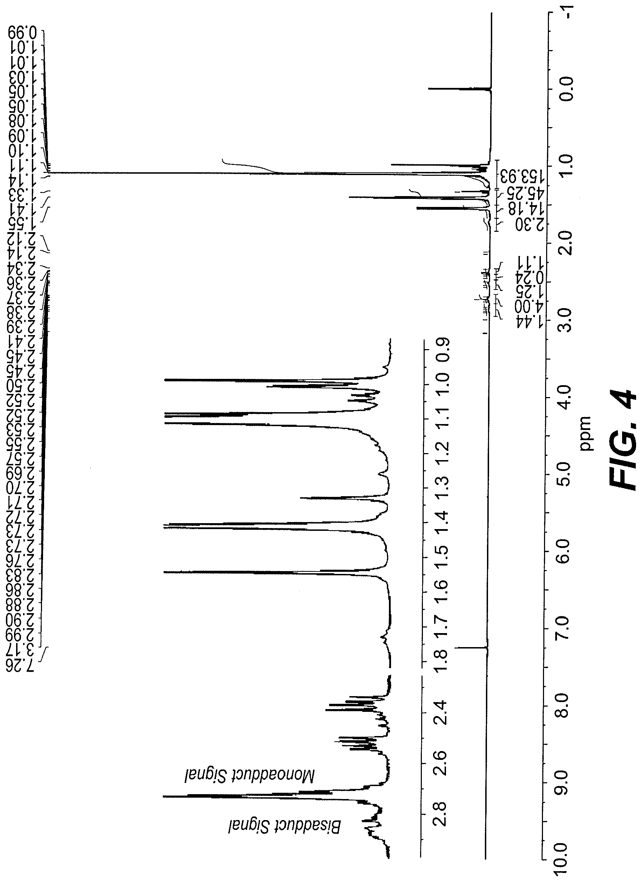

Based on ¹H NMR spectroscopic analysis (see Figure 4). Milder conditions using these initiators at 25°C led to incomplete conversion. This problem was successfully addressed using photoinitiation with 365 nm UV light, which afforded quantitative conversion of the PIB-alkene in 8 h with negligible bis-adduct **2** formation.

### Example 2

### Proposed Mechanism of Action

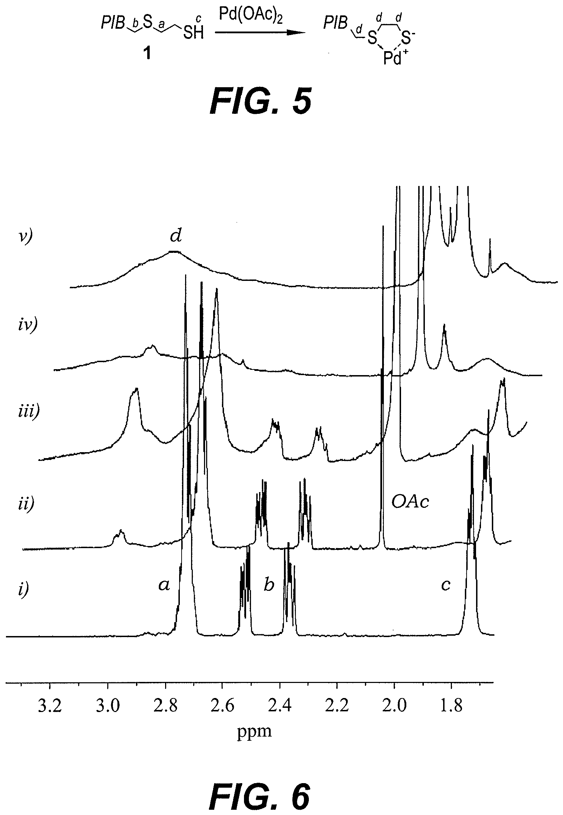

The PIB-bound sequestrant we prepared contains two different binding sites - thioether and thiol. They have differing complexation activity and affinity to transition metals. ¹H NMR spectroscopy titration of **1** with palladium acetate was used to understand better the complexation of **1** to Pd²⁺ (see Figure 6). It led to a pronounced change in the chemical shift of the acetate protons from 2.00 ppm to 2.10 ppm that is characteristic for free acetic acid. Saturation was detected at equimolar [Pd²⁺]: [1] ratio by appearance of the signal of free palladium acetate complex. At this stage, signals of all three methylene groups adjacent to the sulfur atoms in **1** were shifted downfield with significant broadening, whereas the signal of the mercaptan hydrogen at 1.75 ppm disappeared, possibly due to proton exchange. These observations suggest chelation of Pd²⁺ with both coordination sites (see Fig. 5), similar to chelation with thioglycolic acid.

### Example 3

### Sequestering transition metals from aqueous solution and polar organic solvent

A series of experiments were performed to determine the ability of **1** to sequester metals (in particular Cu²⁺ and Pd²⁺) from various polar solvents, including water. Our initial studies involved sequestration of transition metal cations such as Co²⁺, Ni²⁺, Cu²⁺, Pd²⁺ and Ru³⁺ from solutions of their salts in deionized water, methanol or acetonitrile by a heptane solution of **1.** In a typical experiment, a solution of sequestrant in heptane was added to a solution of CuSO₄ in water and shaken, with resulting formation of an emulsion. Shaking was continued for 2 h. During this time, visually observed discoloration of the aqueous phase qualitatively indicated a high level of Cu²⁺ sequestration. Quantitative inductively coupled plasma optical emission spectroscopy (ICP-OES) analysis of the polar phase that indicated 60-fold decrease of copper content (Table 1) confirmed this observation. A control experiment with heptane that did not contain **1** did not result in any metal extraction, based on ICP-OES. According to the results in Table 1, polymer **1** demonstrates good to excellent sequestration efficiency for a variety of transition metals under biphasic conditions. The best results were obtained for copper, palladium and ruthenium ions (Table 1, entries 5-13). In case of Co²⁺ and Ni²⁺ cations, sequestration efficiency for neutral solutions was modest, but it significantly increased under basic conditions. The same trend was observed for other metals. This observation can be explained by formation of poorly soluble metal hydroxides with enhanced affinity to sequestrant **1.** Although 99.5% of palladium was absorbed from water solution in only 15 minutes, sequestration from acetonitrile required extended times to achieve the same efficiency. This observation is attributed to competitive complexation of Pd²⁺ cation by the acetonitrile.

**Table 1: Metal sequestration by 1 under biphasic conditions**

| Entry | Metal | Solvent | Time, h | Concentration, ppm | | Sequestration efficiency, % |
|---|---|---|---|---|---|---|
| | | | | initial | final | |
| 1 | Co | water | 4 | 26.0 | 17.4 | 33.1 |
| 2 | | water^{a} | 4 | 26.0 | 2.64 | 89.8 |
| 3 | Ni | water | 4 | 26.0 | 17.9 | 31.2 |
| 4 | | water^{a} | 4 | 26.0 | 3.72 | 85.7 |
| 5 | Cu | water | 2 | 21.6 | 0.360 | 98.3 |
| 6 | | MeOH | 2 | 14.4 | 0.0250 | 99.8 |
| 7 | Ru | water | 4 | 26.0 | 1.02 | 96.1 |
| 8 | | water^{a} | 4 | 26.0 | 0.0200 | 99.9 |
| 9 | Pd | water | 2 | 500 | 0.270 | 99.9 |
| 10 | | water | 0.25 | 22.5 | 0.120 | 99.5 |
| 11 | | water^{a} | 1.5 | 26.8 | 0.0250 | 99.9 |
| 12 | | CH₃CN | 0.25 | 50.0 | 2.90 | 94.2 |
| 13 | | CH₃CN | 1.5 | 50.0 | 0.160 | 99.7 |

| | | | | | | |
|---|---|---|---|---|---|---|
| ^{a} pH= 10 | | | | | | |

### Example 4

### Sequestering palladium in presence of competitive ligands

We also investigated whether a heptane solution of 1 could competitively sequester palladium species from polar organic solutions in the presence of other ligands that are commonly used in catalytic reactions. According to ICP-OES results (Table 2) high levels of Pd were sequestered by 1 in 4 h, in most cases. Sequestration efficiency tended to increase with time and generally exceeded 96%, except for samples where Pd was complexed by P(*o*-Anisyl)₃, P(*o*-Tolyl)₃, RuPhos, DPPF and Hermann's ligand. Even in those cases, around 90-95% of Pd could be removed with **1** if the extraction time was increased.

**Table 2: Competitive sequestration of palladium complexes from acetonitrile solutions**

| Pd complex | Concentration, ppm | | Efficiency, % | |
|---|---|---|---|---|
| | in 4 h | in 12 h | in 4 h | in 12 h |
| (PPh₃)₂Pd(OAc)₂ | 0.620 | 0.39 | 98.8 | 99.2 |
| (P(*o*-Anisyl)₃)₂Pd(OAc)₂ | 6.36 | 3.17 | 87.3 | 93.7 |
| (P(*o*-Tolyl)₃)₂Pd(OAc)₂ | 6.03 | 1.94 | 87.9 | 96.1 |
| (PCy₃)₂Pd(OAc)₂ | 0.610 | 0.560 | 98.8 | 98.9 |
| (RuPhos)₂Pd(OAc)₂ | 9.24 | 2.01 | 81.5 | 96.0 |
| (DPPF)Pd(OAc)₂ | 10.2 | 2.67 | 79.5 | 94.7 |
| (DPEPhos)Pd(OAc)₂ | 2.08 | 1.02 | 95.8 | 98.0 |
| (XPhos)Pd(OAc)₂ | 0.820 | 0.440 | 98.4 | 99.1 |
| Pd₂(dba)₃ | 2.65 | 1.47 | 97.3 | 98.5 |
| (C₆H₅CN)₂PdCl₂ | 0.430 | 0.430 | 99.3 | 99.1 |
| (CH₃CN)₂PdCl₂ | 0.310 | 0.190 | 99.4 | 99.6 |
| Herrmann's catalyst | 8.05 | 5.19 | 83.9 | 89.6 |

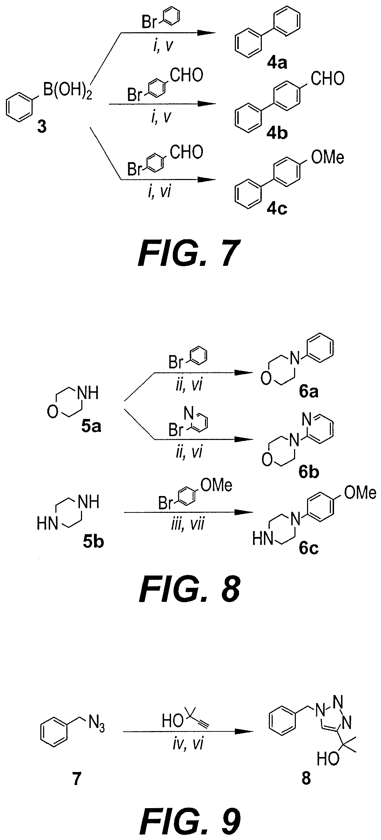

Metal sequestration is often important in catalytic reactions where the catalysts end up in a product phase. Our results in Tables 1 and 2 suggest that the soluble polymer bound sequestrant **1** should be useful in these cases. To explore this question, we decided to investigate the use of **1** for removal of the Pd residues from Suzuki cross-coupling (see Fig. 7) and Buchwald-Hartwig amination reactions (see Fig. 8). Similar studies were also carried out for a CuAAC reaction (see Fig. 9). In Fig. 7, the reaction conditions included (*i*) 1 eq. ArBr, 0.025 eq. Pd(OAc)₂, 0.05 eq. P(*o*-Anisyl)₃, 2 eq. K₂CO₃, toluene, 110°C, 12 h; (*v*) **1,** MeOH/heptane; and/or (*vi*) **1,** DCM/heptane/MeOH. In Fig. 8, the reaction conditions included (*ii*) 1.05 eq. ArBr, 0.01 eq. Pd(OAc)₂, 0.02 eq. RuPhos, 1.2 eq. *t*-BuONa, neat, 110°C, 12 h; (*iii*) 0.9 eq. ArBr, 0.01 eq. Pd₂(dba)₃, 0.015 eq. *rac*-BINAP, 1.5 eq. *t*-BuONa, toluene/THF, 100°C, 12 h; (vi) **1***,* DCM/heptane/MeOH; and/or (*vii*) **1,** acetonitrile/heptane. In Fig. 9, the reaction conditions included (*iv*) 1 eq. alkyne, 0.15 eq. CuSO₄·5H₂O, 0.45 eq. sodium ascorbate, DCM/H₂O, 25°C, 3 h; and (*vi*) 1, DCM/heptane/MeOH.

### Example 5

### Sequestering Suzuki cross-coupling catalyst

Reaction of phenyl boronic acid **3** with different substituted bromoarenes under typical coupling conditions described above using 2.5 mol% of Pd(OAc)₂ afforded biaryls **4a-4c** in toluene (Fig. 7). The crude products **4a,4b** (dark brown) contained 275 ppm of Pd as measured by ICP-OES. However, when the crude products were dissolved in MeOH and shaken for 4 h with a 6-fold excess of 1 in a heptane solution, complete discoloration of the MeOH phase was observed. Quantitative ICP-OES analysis of the treated product showed that the Pd concentration decreased by 99.9 % (Table 3). However, in the case of the reaction leading to **4c,** the Pd recovery under the same conditions was not as efficient. A separate experiment when 1 was allowed to interact with the crude product mixture under homogeneous conditions afforded quantitative Pd sequestration. In this case the crude **4c** was mixed with a 6-fold excess of 1 in DCM (dichloromethane) and stirred at ambient temperature for 2 h. After the solvent removal, the desired 4-methoxybisphenyl **4c** was isolated by liquid-liquid fractionation in MeOH-heptane 1:1 (v/v) mixture.

**Table 3: Palladium/copper sequestration from model reaction mixtures**

| Substrate | Metal concentration, ppm | | Sequestration efficiency, % |
|---|---|---|---|
| | Crude | treated | |
| **4a** | 275 | 0.170 | 99.9 |
| **4b** | 275 | 0.180 | 99.9 |
| **4c** | 275 | 0.230 | 99.9 |
| **6a** | 171 | 1.25 | 99.3 |
| **6b** | 246 | 0.130 | 99.9 |
| **6c** | 290 | 63.2^{a} | 78.2^{a} |
| **6c** | 290 | 9.01^{b} | 96.9^{b} |
| **8** | 727 | 0.300 | 99.9 |

| | | | |
|---|---|---|---|
| ^{a} at 25°C; ^{b} at 80°C | | | |

### Example 6

### Sequestering Buchwald-Hartwig animation reaction catalyst

Bromobenzene and 2-bromopyridine were successfully coupled to morpholine under neat conditions using 1 mol% of Pd(OAc)₂ and RuPhos as a ligand to afford compounds **6a,6b** (see Fig. 8). Again, a high level of removal of the Pd residues from the final product was achieved under biphasic conditions. A third example of this reaction that led to formation of *N-*(4-anisyl)piperazine **6c** was slightly less successful and afforded only 63% of Pd sequestrated at ambient temperature. Similar to the situation with methoxybisphenyl **4c,** such a poor sequestration efficiency is a result of modest solubility of the crude product in the solvent mixture. In this case, heating the biphasic mixture of the acetonitrile solution of the product **6c** and the heptane solution of 1 at 80°C for 4 h led to 96.9% sequestration of the Pd catalyst residues (see Table 3).

### Example 7

### Sequestering Cu(I)-catalyzed alkyne/azide cyclization reaction catalyst

The azide-alkyne "click" reaction between benzyl azide 7 and dimethyl ethynyl carbinol in the presence of 15 mol% of Cu led to formation of a triazole **8.** Copper sequestration afforded nearly 2500-fold reduction of the residual Cu amount in the reaction product (Table 3) that corresponds to more than 99.9 % efficiency.

The results obtained in these experiments show that a heptane-soluble, PIB-bound thioether-thiol metal scavenger is easy to synthesize and is generally highly effective at removing metals from aqueous or polar organic solutions under biphasic conditions. In many cases, this sequestrating agent removes >99% of the metal from the aqueous or polar organic phase. This material is successful at metal sequestration even when there are other ligands present and can be used for the treatment of crude reaction mixtures following catalytic reactions. Even in cases where the sequestration is not initially quantitative, minor experimental changes are effective in producing near quantitative metal sequestration.
Fig. 1 is a reaction scheme for the synthesis of a polymer-supported chelating agent.
Fig. 2 is the ¹H NMR spectrum of the polymer-supported chelating agent synthesized according to the reaction scheme of Fig. 1.
Fig. 3 is the ¹³C NMR spectrum of the polymer-supported chelating agent synthesized according to the reaction scheme of Fig. 1.
Fig, 4 is the ¹H NMR spectrum of the polymer-supported chelating agent of Fig. 1 mixed with the unwanted byproduct, compound **2.**
Fig. 5 is a diagrammatic reaction scheme for the reaction of palladium acetate with the polymer-supported chelating agent of Fig. 1, showing the inventors' proposed explanation for the chelation of palladium.
Fig. 6 is a composite of ¹H NMR spectra for the titration of the polymer-supported chelating agent of Fig. 1 by palladium acetate, showing the concentration of Pd(OAc)₂ at (*i*) 0 eq.; (*ii*) 0.2 eq.; (*iii*) 0.5 eq.; (*iv*) 1 eq.; and (v) 2 eq., signal assignments for the peaks being shown in Fig.2.
Fig. 7 shows reaction schemes of Suzuki cross-coupling reactions tested for transition metal catalyst removal by the polymer-supported chelating agent of Fig. 1.
Fig. 8 discloses reaction schemes of Buchwald-Hartwig Animation reactions tested for transition metal catalyst removal by the polymer-supported chelating agent of Fig. 1.
Fig. 9 describes a reaction scheme for a copper-catalyzed azide-alkyne cycloaddition reaction tested for transition metal catalyst removal by the polymer-supported chelating agent of Fig. 1.

Similar reference characters denote corresponding features consistently throughout the attached drawings.

## Claims

1. A polymer-supported chelating agent, comprising polyisobutylene having a terminal group, the terminal group being a chelating agent, wherein the polymer-supported chelating agent has the formula:

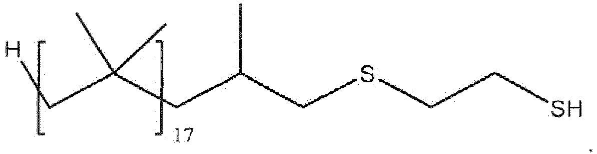

2. A method of synthesizing the polymer-supported chelating agent according to claim 1, comprising the steps of:
dissolving alkene-terminated polyisobutylene and 1,2-ethanedithiol in a solvent mixture of ethanol and heptane, the solvent mixture being 1:1 ethanol:heptane volume-to-volume to form a reaction mixture;
adding a polymerization initiator to the reaction mixture; and
irradiating the reaction mixture with ultraviolet light.

3. The method according to claim 2, wherein said polymerization initiator comprises azobisisobutyronitrile (AIBN).

4. The method according to claim 2, wherein said polymerization initiator comprises di-*tert*-butyl peroxide (DTBP).

5. The method according to any of claims 2 to 4, wherein said step of irradiating the reaction mixture with ultraviolet light comprises irradiating the reaction mixture with ultraviolet light at a wavelength of 365 nm.

6. The method according to claim 5, wherein said step of irradiating the reaction mixture with ultraviolet light at a wavelength of 365 nm is performed at 25°C.

7. A method of removing a transition metal from a polar solvent using the polymer-supported chelating agent according to claim 1, comprising the steps of:
dissolving at least a stoichiometric quantity comprising a six-fold excess of the polymer-supported chelating agent in an extraction solvent;
mixing the extraction solvent with a polar solvent having the transition metal in solution to selectively extract the transition metal into the extraction solvent by chelation of the transition metal;
waiting for the extraction solvent and the polar solvent to separate into a nonpolar phase and a polar phase; and
separating the nonpolar phase from the polar phase, the polymer-supported chelating agent having the transition metal chelated thereto being selectively solvated in the nonpolar phase.

8. The method according to claim 7, wherein said extraction solvent comprises heptane.

9. The method according to claim 7, wherein said extraction solvent comprises dichloromethane.

10. The method according to any of the claims 7 to 9, wherein the mixing step further comprises heating the mixed extraction and polar solvents at 80°C.

## Patentansprüche

1. Polymer-geträgertes Chelatreagenz, umfassend Polyisobutylen mit einer Endgruppe, die ein Chelatbildner ist, wobei das Polymer-geträgerte Chelatreagenz die Formel hat:

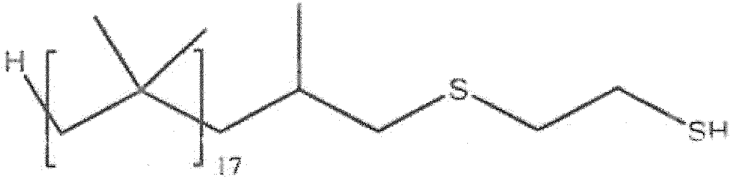

2. Verfahren zur Synthese des Polymer-geträgerten Chelatreagenz nach Anspruch 1, umfassend die Schritte:
Lösen von Alken-terminiertem Polyisobutylen und 1,2-Ethandithiol in einem Lösungsmittelgemisch aus Ethanol und Heptan, wobei das Lösungsmittelgemisch 1: 1 Ethanol: Heptan Volumen zu Volumen ist, um ein Reaktionsgemisch zu bilden;
Zugabe eines Polymerisationsinitiators zu dem Reaktionsgemisch; und
Bestrahlen des Reaktionsgemisches mit ultraviolettem Licht.

3. Verfahren nach Anspruch 2, wobei der Polymerisationsinitiator Azobisisobutyronitril (AIBN) umfasst.

4. Verfahren nach Anspruch 2, wobei der Polymerisationsinitiator Di-tert-butylperoxid (DTBP) umfasst.

5. Verfahren nach einem der Ansprüche 2 bis 4, wobei der Schritt des Bestrahlens der Reaktionsmischung mit ultraviolettem Licht das Bestrahlen des Reaktionsgemisches mit ultraviolettem Licht bei einer Wellenlänge von 365 nm umfasst.

6. Verfahren nach Anspruch 5, wobei der Schritt des Bestrahlens des Reaktionsgemisches mit ultraviolettem Licht bei einer Wellenlänge von 365 nm bei 25°C durchgeführt wird.

7. Verfahren zum Entfernen eines Übergangsmetalls aus einem polaren Lösungsmittel unter Verwendung des Polymer-geträgerten Chelatreagenz nach Anspruch 1, umfassend die Schritte:
Lösen mindestens einer stöchiometrischen Menge des Polymer-geträgerten Chelatreagenz nach Anspruch 3 in einem Extraktionslösungsmittel;
Mischen des Extraktionslösungsmittels mit einem polaren Lösungsmittel mit dem Übergangsmetall in Lösung, um das Übergangsmetall durch Chelatisierung des Übergangsmetalls selektiv in das Extraktionslösungsmittel zu extrahieren;
Warten, bis sich das Extraktionslösungsmittel und das polare Lösungsmittel in eine unpolare Phase und eine polare Phase getrennt haben; und
Trennen der unpolaren Phase von der polaren Phase, wobei das Polymer-geträgerte Chelatreagenz mit dem dazu chelatierten Übergangsmetall selektiv in der unpolaren Phase solvatisiert wird.

8. Verfahren nach Anspruch 7, wobei das Extraktionslösungsmittel Heptan umfasst.

9. Verfahren nach Anspruch 7, wobei das Extraktionslösungsmittel Dichlormethan umfasst.

10. Verfahren nach einem der Ansprüche 7 bis 9, wobei der Mischschritt ferner das Erhitzen der gemischten Extraktion und der polaren Lösungsmittel auf 80 ° C umfasst.

## Revendications

1. Agent chélatant supporté sur polymère, comprenant du polyisobutylène ayant un groupe terminal, le groupe terminal étant un agent chélatant, l'agent chélatant supporté sur polymère ayant la formule :

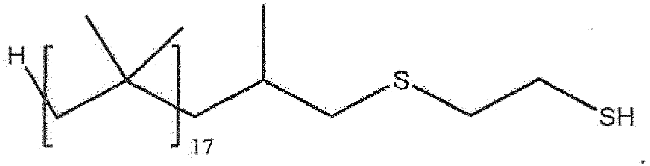

2. Procédé de synthèse de l'agent chélatant supporté sur polymère selon la revendication 1, comprenant les étapes consistant à :
dissoudre du polyisobutylène à terminaison alcène et de l'1,2-éthanedithiol dans un mélange de solvants d'éthanol et d'heptane, le mélange de solvants étant 1:1 éthanol:heptane en volume pour former un mélange réactionnel ;
ajouter un initiateur de polymérisation au mélange réactionnel ; et
exposer le mélange réactionnel à un rayonnement de lumière ultraviolette.

3. Procédé selon la revendication 2, dans lequel ledit initiateur de polymérisation comprend de l'azobisisobutyronitrile (AlBN).

4. Procédé selon la revendication 2, dans lequel ledit initiateur de polymérisation comprend du peroxyde de di-tert-butyle (DTBP).

5. Procédé selon l'une quelconque des revendications 2 à 4, dans lequel ladite étape d'exposition à un rayonnement de lumière ultraviolette du mélange réactionnel comprend l'exposition du mélange réactionnel à un rayonnement de lumière ultraviolette à une longueur d'onde de 365 nm.

6. Procédé selon la revendication 5, dans lequel ladite étape d'exposition du mélange réactionnel à un rayonnement de lumière ultraviolette à une longueur d'onde de 365 nm est effectuée à 25 °C.

7. Procédé d'élimination d'un métal de transition d'un solvant polaire à l'aide de l'agent chélatant supporté sur polymère selon la revendication 1, comprenant les étapes consistant à :
dissoudre au moins une quantité stœchiométrique comprenant un excès sextuple de l'agent chélatant supporté par polymère dans un solvant d'extraction ;
mélanger le solvant d'extraction avec un solvant polaire ayant le métal de transition en solution pour extraire sélectivement le métal de transition dans le solvant d'extraction par chélation du métal de transition ;
attendre que le solvant d'extraction et le solvant polaire se séparent en une phase non polaire et une phase polaire ; et
séparer la phase non polaire de la phase polaire, l'agent chélatant supporté sur polymère ayant le métal de transition chélaté à celui-ci étant sélectivement solvaté dans la phase non polaire.

8. Procédé selon la revendication 7, dans lequel ledit solvant d'extraction comprend de l'heptane.

9. Procédé selon la revendication 7, dans lequel ledit solvant d'extraction comprend du dichlorométhane.

10. Procédé selon l'une quelconque des revendications 7 à 9, dans lequel l'étape de mélange comprend en outre le chauffage de l'extraction mélangée et des solvants polaires à 80 °C.
